# EUROPÄISCHE PATENTSCHRIFT

(11) **EP 3 766 673 B1**
(45) Veröffentlichungstag und Bekanntmachung des Hinweises auf die Patenterteilung: **11.10.2023**
(21) Anmeldenummer: 19187066.6
(22) Anmeldetag: 18.07.2019
(51) Int. Cl.: B29C 65/48, B29C 65/50, B60J 10/23, B60J 10/00, B29C 65/00, B29C 65/14, B23P 19/04, B29K 105/16, B29K 505/00, B29L 31/00, B29L 31/26, B29L 31/30

(54) **GEFÜGTER PROFILSTRANG MIT METALLISCHEM MARKER UND FÜGEVERFAHREN ZU DESSEN HERSTELLUNG**
JOINED PROFILE STRAND HAVING A METAL MARKER AND JOINING METHOD OF MANUFACTURING SAME
PROFILÉ ASSEMBLÉ AVEC UN MARQUEUR METALLIQUE ET SON PROCÉDÉ D'ASSEMBLAGE

(43) Veröffentlichungstag der Anmeldung: 20.01.2021
(73) Patentinhaber: Eldisy GmbH, 39638 Gardelegen (DE)
(72) Erfinder: Bäßler, Manuel, 70599 Stuttgart (DE); Barth, Stefan, 39649 Gardelegen/OT Mieste (DE); Gäde, Daniel, 21271 Asendorf (DE)
(74) Vertreter: btb IP Bungartz Baltzer Partnerschaft mbB Patentanwälte

(56) Entgegenhaltungen:
- EP-A1- 1 284 852
- EP-A1- 3 218 159
- EP-A1- 3 431 250
- WO-A1-2017/167871
- DE-A1-102009 037 216
- DE-A1-102013 114 775
- DE-A1-102018 110 496
- DE-A1-102018 115 878
- DE-A1-102018 115 880

## Beschreibung

Die Erfindung betrifft ein einen Profilstrang aus einem Weichkunststoff- und/oder Gummimaterial zur Verwendung als Dichtungsprofil, Kantenschutzprofil oder dergleichen an einem Kraftfahrzeug, aufweisend eine Verbindungsstelle, an der ein erstes stirnseitiges Schnittende und eine zweites stirnseitiges Schnittende miteinander verbunden sind, wobei im Bereich der Verbindungsstelle ein metallischer Marker zur automatisierten Identifizierbarmachung der Verbindungsstelle vorgesehen ist. Die Erfindung betrifft ferner ein Verfahren zur Herstellung eines solchen Profilstrangs und ein nach einem solchen Verfahren hergestellten Profilstrang.

Aus den Druckschriften EP 2 419 239 A1, EP 3 218 159 A1, EP 3 431 250 A1 und EP 1 733 839 A1 sind verschiedene Verfahren zur Herstellung von derartigen Profilsträngen, derartige Profilstränge sowie automatisierte, insbesondere robotergestützte Verfahren zur Anbringung derartiger Profilstränge an Kraftfahrzeugen bekannt.

Die im Stand der Technik beschriebenen Verfahren beschäftigen sich dabei insbesondere mit der Herstellung von auf Rollenspeichern aufzuwickelnden Endlosprofilsträngen bei einem Fahrzeugzulieferer (dem Profilstranghersteller) und der späteren Verarbeitung des beim Fahrzeughersteller als Endlosstrang von der Rolle wieder abzuwickelnden Profilstrangs sowie dessen Anbringung am Kraftfahrzeug. Im Fokus der beschriebenen Verfahren steht unter anderem das Heraustrennen und/oder das Markieren von Fehlstellen sowie die Identifizierbarmachung von Verbindungsstellen, die insbesondere durch das nachträgliche Fügen freier stirnseitiger Schnittenden benachbarter Strangabschnitte erzeugt werden, die infolge des Heraustrennens der Fehlstellen entstanden sind.

Fehlstellen sind dabei als in der Herstellung unbeabsichtigt entstehende und im Produktionsprozess zu entfernende Herstellungsfehler zu verstehen (Oberflächenbeschädigungen, Lunker, Materialfehler, Lackierfehler, Blasen, "Pickel", etc.), während Verbindungsstellen nach Heraustrennen der Fehlstellen oder zur Bildung eines in sich geschlossenen Profilsstrangrings nach Ablängen eines Profilsstrangabschnitts durch das Fügen zweier stirnseitiger Schnittenden gezielt erzeugt werden. Eine Verbindungsstelle ist demnach nicht als Fehlstelle zu verstehen.

Von derartigen Profilsträngen geht auch die vorliegende Erfindung aus.

Trotz der gezielten Erzeugung der Verbindungsstellen wird im Stand der Technik davon ausgegangen, dass bei Endlosprofilsträngen die Verbindungsstellen beim Fahrzeughersteller aus einem Endlosstrang herausgetrennt werden. Dem liegt Annahme zugrunde, dass die Verbindungsstelle die Funktion des Profilsstrangs beeinträchtigen könnte, etwa weil diese Undichtigkeiten verursachen könnte, oder infolge ihrer Sichtbarkeit einen für den Fahrzeugkäufer nicht akzeptablen minderen Qualitätseindruck vermittelt.

Zu diesem Zweck wird in der EP 3 218 159 A1 und der EP 3 431 250 A1 die Möglichkeit offenbart, den Profilsstrang im Bereich der Verbindungsstellen zur Identifizierbarmachung in einem automatisierten Verfahren mit metallischen Markern zu versehen, die von einem Metalldetektor detektiert werden können. Diese metallischen Marker können durch eine Naht mit metallischem Garn, durch einen im Bereich einer Verbindungsstelle oder zwischen den zu einer Verbindungsstelle gefügten stirnseitigen Schnittenden angeordneten metallischen Marker, oder im Falle der Verwendung eines Verbindungsmaterials, dass sich von dem Material des Profilsstrangs unterscheidet, durch Metallpartikel gebildet sein.

Nachteilig an den bekannten Verfahren ist, dass eine derartige Identifizierbarmachung der Verbindungsstellen durch metallische Marker die Verbindungsstellen im Gegensatz zu Verbindungsstellen, die durch bloßes Verschweißen oder Verkleben und ohne den Einsatz derartiger Marker erzeugt worden sind, mit bloßem Auge deutlich erkennbar macht, nämlich durch eine optisch besonders auffällige, deutlich verbreitete Fügestelle, durch die Verwendung eines metallischen Garns, durch die Anbringung eines Markers auf einer sichtbaren Außenseite des auch nach Montage am Kraftfahrzeug sichtbaren Profilstrangs oder durch die Platzierung eines metallischen Markers zwischen den zu verbindenden Schnittenden unter Beibehaltung eines deutlich sichtbaren und die Funktion des Profilsstrangs beeinträchtigenden Spaltes.

Auch ist eine Funktionsbeeinträchtigung zu befürchten, wenn das zum Fügen der Schnittenden verwendete Material keine für den Einsatzweck des Profilsstrangs geeigneten Eigenschaften aufweist, etwa wenn es zu hart ist, wenn es sich vom Material des Profilsstrangs optisch deutlich abhebt, wenn wegen des Hervorstehens gegenüber der Profilsstrangoberfläche die Dichtungsfunktion zu beeinträchtigen droht, oder wenn die Art der Verbindungstellenerzeugung das vom Profilquerschnitt definierte Schlauchvolumen verschließt, so dass die darin befindliche Luft beim Zusammendrücken der Fahrzeugtür nicht mehr frei innerhalb des Profils zirkulieren oder aus diesem entweichen kann.

In der Konsequenz können die gemäß der Lehren des Standes der Technik markierten Verbindungsstellen nicht an dem letztlich am Fahrzeug anzubringenden Profilsstrangabschnitt verbleiben und müssen vor der Endmontage herausgeschnitten werden.

Anders als im Stand der Technik bisher angenommen, kann es allerdings auch erstrebenswert sein, eine Verbindungsstelle vor der Montage eines Dichtungsstrangabschnitts nicht herauszutrennen, sondern an dem am Fahrzeug anzubringenden Profilsstrangabschnitt zu belassen. Dies ermöglicht schnellere Zykluszeiten, eine geringere Produktionskomplexität und weniger Ausschuss. Bei der Herstellung des Profilsstrangs kann auf die Kontrolle eines zwischen zwei Verbindungsstellen einzuhaltenden Mindestabstands verzichtet werden und vor der Anbringung am Fahrzeug erübrigt sich das Detektieren und das Heraustrennen einer Verbindungsstelle. Allerdings ist hierfür erforderlich, dass die Verbindungsstelle derart erzeugt ist, dass sie optisch gar nicht oder nur vernachlässigbar auffällig ist und sie die Funktion des Profilsstrangs am Fahrzeug nicht zu beeinträchtigen droht.

Weiter kann auch dann eine detektierbare Markierung der Verbindungsstelle sinnvoll sein, wenn der am Fahrzeug anzubringende Profilsstrangabschnitt durch Verbinden seiner beiden stirnseitigen Schnittenden vor dessen Anbringung am Fahrzeug zu einem umlaufend geschlossenen Profilsstrangring ausgebildet ist, weil hierdurch die Lage die Verbindungsstelle auf einfache Weise automatisiert erkannt und in der Folge wie gewünscht platziert werden kann.

Ferner ermöglicht eine Markierung einer Verbindungsstelle mit metallischen Markern derart, dass diese sich weder optisch noch in ihren für die Funktion des Profilsstrangs relevanten Eigenschaften von einer nicht markierten Verbindungsstelle unterscheidet, dem Profilsstranghersteller einen auf dieselbe Weise hergestellten Dichtungsstrang bzw. einen derselben Produktionslinie entstammenden Dichtungsstrang an verschiedene Abnehmer oder für verschiedene Fahrzeuge eines Fahrzeugherstellers zu liefern, unabhängig davon, ob der Fahrzeughersteller den Dichtungsstrang ungeachtet der Verbindungsstellen verwenden oder die Verbindungsstellen zu detektieren und herauszutrennen beabsichtigt. Denn soweit die Verbindungstelle optisch nicht oder nur in noch akzeptablem Maße erkennbar und nicht funktionsbeeinträchtigend ist, kann der Abnehmer die weitere Verarbeitung eigenständig bestimmen. Auch hierdurch wird die Produktion vereinfacht und deren Kosten werden gesenkt.

Vor diesem Hintergrund ist es Aufgabe der Erfindung, einen Profilsstrang der eingangs genannten Art bereit zu stellen sowie ein Verfahren zu dessen Herstellung und dessen Anbringung an einem Fahrzeug anzugeben, bei dem eine Verbindungsstelle einerseits aufgrund der Verwendung eines metallischen Markers mit einfachen Mitteln, etwa einer bevorzugt induktiven oder kapazitiven Metalldetektionseinrichtung, automatisiert identifiziert bzw. detektiert werden kann, der metallische Marker gleichwohl aber die Verwendbarkeit des Dichtungsstrangs auch mit der markierten Verbindungsstelle gegenüber einem Dichtungsstrang mit einer herkömmlichen, nicht mit einem metallischen Marker versehenen Verbindungsstelle nicht in der vorstehend beschriebenen Weise einschränkt.

Zur Lösung der Aufgabe sieht die Erfindung vor, dass die Schnittenden mittels einer Fügemasse stoffschlüssig verbunden sind und der metallische Marker zwischen den stirnseitigen Schnittenden positioniert ist, wobei die Fügemasse in der erzeugten Verbindungsstelle eine Dicke von weniger als 1 mm aufweist, bevorzugt von weniger als 0,5 mm, weiter bevorzugt von weniger als 0,3 mm, und/oder von einer von einer Fügefolie gebildet ist. Die Dicke der Fügefolie, die letztlich die Menge der in die Verbindungsstelle eingebrachten Fügemasse bestimmt, liegt bevorzugt in einem Bereich zwischen 0,15 mm und 0,35 mm, bevorzugt zwischen 0,2 mm und 0,3 mm.

Ein Verfahren zur Herstellung eines derartigen Profilsstrangs mit den Verfahrensschritten
- Durchtrennen eines Profilsstrangs aus Weichkunststoffmaterial und/oder Gummimaterial zum Heraustrennen einer Fehlstelle oder zum Ablängen eines zu einem Profilsstrangring zu verarbeitenden Profilsstrangabschnitts, wobei beim Durchtrennen stirnseitige Schnittenden entstehen,
- Fügen von zwei stirnseitigen Schnittenden zweier verschiedener Strangabschnitte oder von ein und demselben Strangabschnitt mittels einer Fügemasse unter Erzeugung einer Verbindungsstelle, und
- Anbringen eines metallischen Markers im Bereich der Verbindungsstelle vor, während oder nach dem Fügevorgang,
sieht zur Lösung der Aufgabe vor, dass die Schnittenden stoffschlüssig verbunden werden und der metallische Marker durch Aufbringen auf zumindest einem stirnseitigen Schnittende vor dem Fügen in die Verbindungsstelle eingebracht wird, wobei die Fügemasse in der erzeugten Verbindungsstellennaht eine Dicke von weniger als 1 mm aufweist, bevorzugt von weniger als 0,5 mm, weiter bevorzugt von weniger als 0,3 mm oder sogar weniger als 0,2 mm oder weniger 0,1 mm, und/oder durch eine Fügefolie bereitgestellt wird, wobei die Dicke der Fügefolie, die letztlich die Menge der in die Verbindungsstelle eingebrachten Fügemasse bestimmt, bevorzugt in einem Bereich zwischen 0,15 mm und 0,35 mm, bevorzugt zwischen 0,2 mm und 0,3 mm liegt.

Wird der metallische Marker am Profilsstrang an einer Stelle platziert, die bei bestimmungsgemäß am Kraftfahrzeug montierten Profilsstrang optisch verdeckt ist, so ist dieser nach erfolgter Endmontage nicht mehr zu sehen. Gleichzeitig kann die Verbindungsstelle auf herkömmliche Weise durch stoffschlüssiges Fügen der Schnittenden erzeugt werden, ohne dass diese Schnittstelle wie im Stand der Technik gezeigt aufwendig präpariert werden müsste und insbesondere ohne dass die Verbindungsstelle infolge des metallischen Markers die Eigenschaften des Dichtungsstrangs in einer Weise zu beeinträchtigen droht, die über eine Beeinträchtigung hinausgeht, die bei herkömmlicher Erzeugung der Schnittstelle ohne das Vorsehen eines metallischen Markers zu erwarten ist.

Als vorteilhaft hat es sich erwiesen, wenn der metallische Marker an einer Seite des Profilsstrangs angeordnet ist, die nach bestimmungsgemäßer Montage am Kraftfahrzeug in Anlage mit einer Karosserieoberfläche steht. Dies kann insbesondere die Fläche des Profilsstrangs sein, auf die ein doppelseitig wirkender Klebestreifen zur Fixierung des Profilsstrangs am Kraftfahrzeug aufgebracht ist. Alternativ oder zusätzlich kann auch vorgesehen sein, den metallischen Marker im Bereich zumindest eines stirnseitigen Schnittendes in eine Hohlkammer des Profilstrangs eingebracht ist.

Eine besonders vorteilhafte Ausgestaltung der Verbindungsstelle ergibt sich dann, wenn der metallische Marker zumindest teilweise unterhalb einer Schicht eines sich über die Verbindungsstelle erstreckenden mehrschichtigen Klebestreifens angeordnet ist, mit dem der Profilsstrang nach bestimmungsgemäßer Montage am Kraftfahrzeug zumindest unterstützend befestigt ist. Die Schicht des Klebestreifens, unterhalb der der metallische Marker angeordnet ist, kann insbesondere die der Oberfläche des Profilsstrangs zugewandte Klebemassenschicht des Klebestreifens sein, so dass der metallische Marker mit der Oberfläche des Profilsstrangs in unmittelbarem Kontakt steht. Oder die Schicht des Klebestreifens, unterhalb der der metallische Marker angeordnet ist, kann der Liner sein, der die von der Oberfläche des Profilsstrangs abgewandte Klebemassenschicht bedeckt. Je nach Breitenverhältnissen und tatsächlicher Platzierung des metallischen Markers relativ zum Klebestreifen kann die Klebestreifenschicht, unter der der metallische Marker angeordnet ist, denn metallischen Marker teilweise oder vollständig bedecken. Grundsätzlich ist es aber auch denkbar, dass der metallische Marker zumindest teilweise oder auch vollständig auf dem Klebestreifen, insbesondere auf dem Liner des Klebesteifens, angeordnet bzw. platziert ist.

Bevorzugt ist der metallische Marker von einer metallischen Folie, insbesondere von einer Aluminiumfolie oder Kupferfolie, gebildet, die vorteilhaft als dünne Klebefolie (einseitig oder beidseitig klebend) ausgebildet sein kann und eine Dicke von kleiner 0,15 mm, bevorzugt von kleiner 0,1 mm aufweist. Ebenfalls als vorteilhaft hat sich eine Ausgestaltung erwiesen, bei der der metallische Marker von einer mit Metallpartikeln, insbesondere mit Nanopartikeln, versetzten und auf den Profilsstrang aufbringbaren Masse gebildet ist. Eine derartige Masse oder auch Stück metallischer Klebefolie kann punktuell unmittelbar auf eine äußere Oberfläche des Profilsstrangs, im Bereich der Schnittenden in eine querschnittsbedingt gebildete Hohlkammer oder auf einen an dem Profilsstrang angeordneten Klebesteifen, auch außenseitig auf dessen Liner, aufgebracht werden. Die physikalischen Eigenschaften einer derartigen Masse können an die beabsichtigte Art von deren Aufbringung auf den Profilstrang angepasst sein. Bevorzugt handelt es sich um eine noch während der Produktion des Strangmaterials aushärtende bzw. aushärtbare, pastöse Masse.

Wird der metallische Marker mit einer vor dem stoffschlüssigen Fügen der stirnseitigen Schnittenden auf zumindest ein Schnittende aufgebrachten Fügemasse in die Verbindungsstelle eingebracht, wobei die Fügemasse in der erzeugten Verbindungsstelle eine Dicke von weniger als 1 mm, bevorzugt eine Dicke von weniger als 0,5 mm, weiter bevorzugt eine Dicke von weniger als 0,25 mm aufweist und/oder von einer Fügefolie gebildet ist, wobei die Dicke der Fügefolie, die letztlich die Menge der in die Verbindungsstelle eingebrachten Fügemasse bestimmt, vor deren Aufschmelzen zur Herstellung der stoffschlüssigen Verbindung bevorzugt in einem Bereich zwischen 0,15 mm und 0,35 mm, bevorzugt zwischen 0,2 mm und 0,3 mm liegt, so unterscheidet sich die die Verbindungsstelle weder optisch noch hinsichtlich ihrer physikalischen Eigenschaften - von dem Vorhandensein des metallischen Markers abgesehen - nennenswert von einer herkömmlich erzeugten Verbindungsstelle.

Eine Fügefolie, insbesondere also eine Schweiß- bzw. Klebefolie, kann insbesondere als ein auf einer Rolle aufgewickeltes Bandmaterial zur Verfügung gestellt werden und der Verbindungsstelle zugeführt werden. Die Fügefolie wird zur Erzeugung einer Verbindungsstelle nach Erhitzen der zu verbindenden Schnittenden auf eine geeignete Fügetemperatur (in der Klebefuge der Verbindungsstelle erzeugte Temperatur beim Fügevorgang) mit zumindest einem erhitzten Schnittende in Kontakt gebracht, so dass das Material der Fügefolie, welches die die Fügemasse bildet, aufschmilzt und sich mit der mit der Fügemasse in Kontakt gebrachten Oberfläche des zumindest einen Schnittendes stoffschlüssig verbindet. Durch anschließendes in Kontakt bringen der beiden Schnittenden können die Schnittenden sodann gefügt (miteinander verklebt bzw. verschweißt) werden. Die Fügetemperatur, auf die die Schnittenden erhitzt werden, beträgt dabei bevorzugt mindestens 150°C, bevorzugt aber mehr als 200°C, insbesondere 230°C bis 250°C. Die Fügenaht einer derart hergestellten Verbindungsstelle ist nahezu dickenlos (Dicke bevorzugt kleiner als 0,25 mm) und beeinträchtigt die technische Funktion des Strangmaterials nicht. Die Fügefolie hat bevorzugt eine Dicke von 0,15 mm bis 0,3 mm.

Eine auf andere Weise als über eine Fügefolie in die Verbindungsstelle eingebrachte Fügemasse kann durch Aufsprühen, Aufstreichen oder Aufprägen der Fügemasse auf die Schnittenden, Eintunken der Schnittenden in die Masse oder auf sonstige geeignete Weise vor dem Verbinden der Schnittenden auf zumindest ein Schnittende aufgebracht werden.

Beispielhafte Ausführungsformen des Profilstrangs sowie des Verfahrens zu dessen Herstellung sind in den nachfolgend beschriebenen Zeichnungen dargestellt.

In den Zeichnungen zeigt
- Fig. 1: ein Profilstrang in einer perspektivischen Ansicht, und
- Fig. 2: verschiedene Schritte bei der Herstellung eines Strangprofils mit einem im Bereich einer Verbindungsstelle angeordneten metallischen Marker.

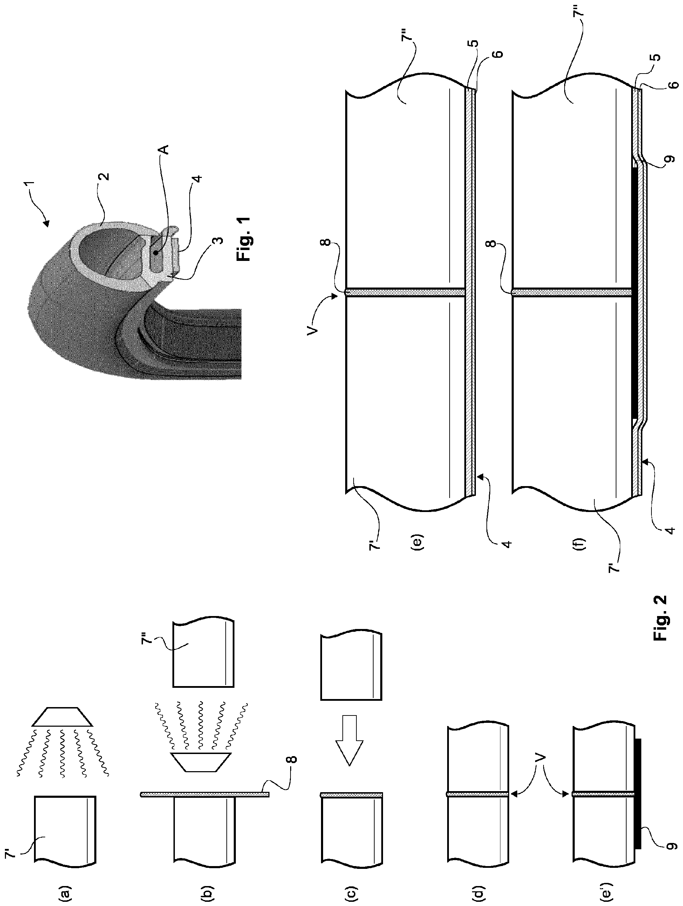

Figur 1 zeigt ein Strangprofil 1, wie es typischerweise als Türdichtung bei einem Kraftfahrzeug eingesetzt wird. Das Strangprofil 1 ist mehrkomponentig und weist einen ersten Materialbereich 2 aus einem Gummi bzw. Kautschuk (z.B. EPDM) und einen zweiten Materialbereich 3 aus einem Weichkunststoff (z.B. TPE) auf. Der erste Materialbereich 2 ist aufgrund des Materials und der schlauchartigen Ausgestaltung des von ihm gebildeten Hohlkammer-Profilstrangquerschnitts außenseitig hoch flexibel und vermag sich dichtend an den Karosseriebereich, mit dem er bei geschlossener Tür in Anlage kommt, anzuschmiegen. Der gegenüber dem ersten Materialbereich 2 etwas steifere zweite Materialbereich 3 formt einen U-förmigen Aufnahmekanal A, der nach bestimmungsgemäßer Montage am Kraftfahrzeug ein Karosserieblech umgreift.

Der in der Figur 1 untere, freie Schenkel des U-förmigen Aufnahmekanals A weist an dessen Unterseite, die nach bestimmungsgemäßer Montage mit einem Karosserieblech in Anlage kommt und folglich optisch verdeckt ist, einen Klebestreifen 4 auf. Der Klebestreifen 4, wie der Darstellung in Figuren 2(e) und 2(f) entnommen werden kann, mehrschichtig aufgebaut und weist zumindest eine Klebstoffschicht 5 und einen Liner 6 auf.

Figur 2 verdeutlicht zwei mögliche Varianten eines Verfahrens zur Herstellung eines Profilstrangs mit einem in einem Bereich einer Verbindungsstelle V positioniertem metallischen Marker. An der Verbindungsstelle V sind zwei stirnseitige Schnittenden zweier benachbarter Strangabschnitte (Herstellung eines Endlosstrangs) oder eines einzelnen Strangabschnitts (Herstellung eines umlaufenden geschlossenen Profilstrangrings) miteinander verbunden.

Nach einer ersten beispielhaften Verfahrensvariante, dargestellt durch die Schritte (a)-(b)-(c)-(d)-(e), wird zunächst die Oberfläche eines ersten stirnseitigen Schnittendes 7' auf eine geeignete Temperatur erwärmt (Schritt (a)). Zur Erwärmung kann insbesondere ein direkt auf die Oberfläche des Schnittendes gerichteter Wärmestrahler zum Einsatz kommen.

Sodann wird in Schritt (b) das Schnittende mit einer Fügemasse 8 in Kontakt gebracht, die infolge der erhitzten Schnittendenoberfläche im unmittelbaren Kontaktbereich aufschmilzt und sich mit der Schnittendenoberfläche verbindet. Die Fügemasse 8 ist bevorzugt von einem thermoplastischen Klebefilm, bevorzugt auf Basis modifizierter Polyolefine, gebildet und kann eine Materialstärke von bevorzugt etwa 0,15 mm bis 0,3 mm aufweisen und wird bevorzugt nach Art eines Klebebandes von einer Fügefolienrolle abgewickelt. Der Bereich der Fügefolie, der mit dem erhitzten Schnittende in Kontakt kommt, wird infolge des partiellen Aufschmelzens aus der Fügefolie herausgelöst und verbleibt nach Entfernen der Fügefolie von dem ersten Schnittende 7' an diesem haften.

Um die von dem Profilstrangquerschnitt gebildete schlauchartige Hohlkammer nicht schnittendenseitig durch die Fügefolie zu verschließen, kann die an dem ersten Schnittende 7` verbliebende Fügefolie geöffnet werden, was beispielsweise mittels eines Durchstechwerkzeugs oder auch durch Druckluftstöße erfolgen kann. Parallel zum in Kontakt bringen der der Fügemasse 8 mit dem ersten Schnittende 7' (zeitgleich oder kurz vorher oder kurz nachher) wird das mit dem ersten Schnittende 7` zu verbindende zweite Schnittende 7" auf eine zum stoffschlüssigen Fügen geeignete Temperatur erhitzt.

In Schritten (c) und (d) werden die beiden Schnittenden 7' und 7" dann in Kontakt miteinander gebracht und mittels der zuvor auf das erste Schnittende 7' aufgebrachten Fügemasse 8 stoffschlüssig verbunden.

In Schritt (e) wird dann der Klebestreifen 4 unterseitig auf den Profilstrang aufgebracht. Der Vorteil des Aufbringens des Klebestreifens 4 erst nach dem Durchtrennen des Profilstrangs und anschließendem Erzeugen der Verbindungsstelle V führt dazu, dass der Klebestreifen sich durchgängig über die Verbindungsstelle hinweg erstreckt, ohne selbst zuvor beim Durchtrennen des Profilstrangs durchtrennt worden zu sein. Dies verleiht der Verbindungsstelle zusätzliche Stabilität und Reißfestigkeit, die nicht nur beim Auf- und Abwickeln von einer Rolle, sondern auch dann von Vorteil sein kann, wenn der Profilstrang ungeachtet einer Verbindungsstelle mit dieser verwendet bzw. verbaut werden soll. Dieser Aspekt des Aufbringens eines sich durchgängig über die Verbindungsstelle erstreckenden Klebestreifens insbesondere nach dem Erzeugen der Verbindungsstelle und ein derartiger Profilstrang wird losgelöst und unabhängig von der Verwendung eines metallischen Markers als eigenständige Erfindung angesehen.

Die in dem vorstehenden Schritt (b) verwendete Fügemasse enthält bevorzugt darin eingebettete Metallpartikel, insbesondere Nanopartikel, die als ein metallischer Marker fungieren, mittels dem die Verbindungsstelle derart identifizierbar gemacht ist, dass diese in einem automatisierten Verfahren berührungslos detektiert werden kann. Resultat des vorstehend beschriebenen Verfahrens ist demnach der in Figur 2(e) dargestellte Profilstrang mit einer Verbindungsstelle V, in die mittels der Fügemasse 8 Metallpartikel als metallischer Marker eingebracht sind.

In einer zu der vorstehend beschriebenen Verfahrensvariante alternativen Verfahrensvariante mit den Schritten (a)-(b)-(c)-(d)-(e`)-(f) wird anstelle einer mit Metallpartikeln versetzten Fügemasse eine herkömmliche Fügemasse ohne Metallpartikel verwendet. Anstelle des in dem zuvor beschriebenen Schritt (e) aufgebrachten Klebestreifens wird gemäß Schritt (e`) zunächst ein metallischer Marker in Form einer metallischen Folie 9, gebildet beispielweise durch einen einseitig oder beidseitig selbstklebenden Metallklebestreifen mit einer bevorzugten Dicke von unter 0,15 mm oder sogar unter 0,1 mm, oder in Form einer mit Metallpartikeln versetzten Masse 9 aufgebracht. Über den so aufgebrachten metallischen Marker wird sodann in Schritt (f), der insoweit Schritt (e) der ersten Verfahrensvariante entspricht, der Klebestreifen 4 aufgebracht, der bevorzugt mehrschichtig ist und eine Klebstoffschicht 5 und einen Liner 6 aufweist.

Alternativ zu der vorstehend beschriebenen Ausführungsvariante kann der metallische Marker auch derart auf den Profilstrang 1 platziert werden, dass dieser sich beim einsatzfertigen Profilstrang auf der Klebstoffschicht 5, gegebenenfalls zwischen Klebstoffschicht 5 und Liner 6, oder auf dem Liner 6 befindet. Zur Anordnung zwischen Klebstoffschicht 5 und Liner 6 ist der Liner 6 aufzutrennen und vor Anbringung des metallischen Markers bereichsweise von der Klebstoffschicht 5 zu lösen.

Selbstverständlich kann der metallische Marker auch dadurch derart positioniert werden, dass er bei bestimmungsgemäß am Kraftfahrzeug montierten Profilsstrang optisch verdeckt ist, dass dieser auf einer oder mehrerer Innenseiten der die U-förmige Aufnahmenut A begrenzenden Flächen angeordnet ist.

### Bezugszeichenliste

- 1: Strangprofil
- 2: erster Materialbereich
- 3: zweiter Materialbereich
- 4: Klebestreifen
- 5: Klebstoffschicht
- 6: Liner
- 7'/7": erstes/zweites Schnittende
- 8: Fügemasse
- 9: metallische Folie / mit Metallpartikeln versetzten Masse
- V: Verbindungsstelle
- A: Aufnahmekanal

## Patentansprüche

1. Profilsstrang (1) aus Weichkunststoff- und/oder Gummimaterial zur Verwendung als Dichtungsprofil, Kantenschutzprofil oder dergleichen an einem Kraftfahrzeug, aufweisend eine Verbindungsstelle (V), an der zwei stirnseitige Schnittenden (7`, 7") miteinander verbunden sind, wobei im Bereich der Verbindungsstelle (V) ein metallischer Marker vorgesehen ist,
**dadurch gekennzeichnet, dass**
die Klebstoffschicht (5) eines Klebestreifens (4) zur zumindest unterstützenden Fixierung des Profilsstrangs (1) am Kraftfahrzeug sich über die Verbindungsstelle (V) erstreckt, wobei die Schnittenden (7`, 7") mittels einer Fügemasse (8) stoffschlüssig verbunden sind und der metallische Marker zwischen den stirnseitigen Schnittenden (7`, 7") positioniert ist, wobei die Fügemasse (8) in der erzeugten Verbindungsstelle (V) eine Dicke von weniger als 1 mm aufweist und/oder von einer Fügefolie gebildet ist.

2. Profilsstrang nach Anspruch 1, **dadurch gekennzeichnet, dass** der metallische Marker im Bereich zumindest eines stirnseitigen Schnittendes in eine Hohlkammer des Profilstrangs (1) eingebracht ist.

3. Profilsstrang nach einem der vorhergehenden Ansprüche, **dadurch gekennzeichnet, dass** der metallische Marker von einer metallischen Folie (9) oder von einer mit Metallpartikeln versetzten und auf den Profilsstrang (1) aufbringbaren Masse (9) gebildet ist.

4. Profilsstrang nach einem der vorhergehenden Ansprüche, **dadurch gekennzeichnet, dass** der metallische Marker mit der vor dem stoffschlüssigen Verbinden der stirnseitigen Schnittenden (7`, 7") auf zumindest ein Schnittende aufgebrachten Fügemasse (8) in die Verbindungsstelle eingebracht ist.

5. Profilsstrang nach einem der vorhergehenden Ansprüche, **dadurch gekennzeichnet, dass** der metallische Marker sich über die Verbindungsstelle (V) hinweg erstreckend an dem Profilstrang (1) angeordnet ist.

6. Verfahren zur Herstellung eines Profilsstrangs, umfassend die Verfahrensschritte:
- Durchtrennen eines Profilsstrangs (1) aus Weichkunststoffmaterial und/oder Gummimaterial zum Heraustrennen einer Fehlstelle oder zum Ablängen eines zu einem Profilsstrangring zu verarbeitenden Profilsstrangabschnitts, wobei beim Durchtrennen stirnseitige Schnittenden (7`, 7") entstehen,
- Fügen von zwei stirnseitigen Schnittenden (7`, 7") zweier verschiedener Strangabschnitte oder von ein und demselben Strangabschnitt unter Erzeugung einer Verbindungsstelle (V),
- Anbringen eines metallischen Markers im Bereich der Verbindungsstelle (V) vor, während oder nach dem Fügevorgang,
- Aufbringen eines Klebestreifen (4) auf den Profilsstrang (1) zur Fixierung des Profilsstrangs (1) am Kraftfahrzeug,
**gekennzeichnet dadurch, dass**
zumindest die Klebstoffschicht (5) des Klebestreifens (4) sich durchgängig über die Verbindungsstelle hinweg erstreckend nach Erzeugung der Verbindungsstelle (V) an dem Profilstrang (1) angeordnet wird, wobei die Schnittenden (7`, 7") mittels einer Fügemasse (8) stoffschlüssig verbunden werden und der metallische Marker zwischen den stirnseitigen Schnittenden (7`, 7") positioniert wird, wobei die Fügemasse (8) in der erzeugten Verbindungsstelle (V) eine Dicke von weniger als 1 mm aufweist und/oder von einer von einer Fügefolie bereitgestellt wird.

7. Verfahren nach dem vorhergehenden Anspruch , **dadurch gekennzeichnet, dass** der metallische Marker im Bereich zumindest einen stirnseitigen Schnittendes (7`, 7") in eine Hohlkammer des Profilstrangs (8) eingebracht ist.

8. Verfahren nach einem der beiden vorhergehenden Ansprüche, **dadurch gekennzeichnet, dass** der metallische Marker mittels der vor dem stoffschlüssigen Verbinden der stirnseitigen Schnittenden (7`, 7") auf zumindest ein Schnittende aufgebrachten Fügemasse (8) in die Verbindungsstelle (V) eingebracht ist.

9. Verfahren nach einem der drei vorhergehenden Ansprüche, **dadurch gekennzeichnet, dass** die Fügemasse (8) mittels eines auf einer Rolle aufgewickelten Bandmaterials bereitgestellt wird und der Verbindungsstelle (V) unter Abwicklung des Bandmaterials von der Rolle zugeführt wird.

## Claims

1. Profile strand (1) of soft plastic and/or rubber material for use as a sealing profile, edge protection profile or the like on a motor vehicle, having a joint (V) at which two end-face cut ends (7', 7") are connected to one another, a metallic marker being provided in the region of the joint (V),
**characterized in that**
the adhesive layer (5) of an adhesive strip (4) for at least supportingly fixing the profile strand (1) to the motor vehicle extends over the joint (V), the cut ends (7', 7") being joined by means of a joining compound (8) and the metallic marker being positioned between the end-face cut ends (7', 7"), the joining compound (8) having a thickness of less than 1 mm in the joint (V) produced and/or being formed by a joining foil.

2. Profile strand according to claim 1, **characterized in that** the metallic marker is introduced into a cavity of the profile strand (1) in the region of at least one end-face cut end.

3. Profile strand according to one of the preceding claims, **characterized in that** the metallic marker is formed by a metallic foil (9) or by a compound (9) which is mixed with metal particles and can be applied to the profile strand (1).

4. Profile strand according to one of the preceding claims, **characterized in that** the metallic marker is introduced into the joint with the joining compound (8) applied to at least one cut end before the end-face cut ends (7', 7") are joined by material bonding.

5. Profile strand according to one of the preceding claims, **characterized in that** the metallic marker is arranged on the profile strand (1) extending over the joint (V).

6. Method for manufacturing a profile strand, comprising the method steps:
- Cutting through a profiled strand (1) of soft plastic material and/or rubber material to separate out a defect or to cut to length a profiled strand section to be processed into a profiled strand ring, end-face cut ends (7', 7") being produced during the cutting through,
- Joining two end-face cut ends (7', 7") of two different strand sections or of one and the same strand section to produce a joint (V),
- Application of a metallic marker in the region of the joint (V) before, during or after the joining operation,
- Application an adhesive strip (4) to the profile strand (1) for fixing the profile strand (1) to the motor vehicle,
**characterized in that**
at least the adhesive layer (5) of the adhesive strip (4) is arranged so as to extend continuously over the joint after the joint (V) has been produced on the profile strand (1), the cut ends (7', 7") being joined by means of a joining compound (8) and the metallic marker being positioned between the end-face cut ends (7', 7"), the joining compound (8) having a thickness of less than 1 mm in the produced joint (V) and/or being provided by one of a joining foil.

7. Method according to the preceding claim, **characterized in that** the metallic marker is introduced into a cavity of the profile strand (8) in the region of at least one end-face cut end (7', 7").

8. Method according to one of the two preceding claims, **characterized in that** the metallic marker is introduced into the joint (V) by means of the joining compound (8) applied to at least one cut end before the end-face cut ends (7', 7") are joined in a material-to-material bond.

9. Method according to any of the three preceding claims, **characterized in that** the joining compound (8) is provided by means of a strip material wound on a roll and is supplied to the joint (V) while unwinding the strip material from the roll.

## Revendications

1. Profilé (1) en matière plastique souple et/ou en caoutchouc, destiné à être utilisé comme profilé d'étanchéité, profilé de protection d'arête ou analogue sur un véhicule automobile, présentant un joint (V) au niveau duquel deux extrémités de coupe frontales (7', 7") sont reliées entre elles, un marqueur métallique étant prévu dans la zone du joint (V),
**caractérisé en ce que**
la couche adhésive (5) d'une bande adhésive (4) pour la fixation au moins assistée du profilé (1) sur le véhicule automobile s'étend sur le joint (V), les extrémités de coupe (7', 7") sont reliées par liaison de matière au moyen d'une masse d'assemblage (8) et le marqueur métallique est positionné entre les extrémités de coupe frontales (7', 7"), la masse d'assemblage (8) comprenant une épaisseur inférieure à 1 mm dans le joint (V) créé et/ou étant formée par une feuille d'assemblage.

2. Profilé selon la revendication 1, **caractérisé en ce que** le marqueur métallique est introduit dans une cavité du profilé (1) dans la zone d'au moins une extrémité de coupe frontale.

3. Profilé selon l'une des revendications précédentes, **caractérisé en ce que** le marqueur métallique est formé par une feuille métallique (9) ou par une masse (9) mélangée à des particules métalliques et pouvant être appliquée sur le profilé (1).

4. Profilé selon l'une des revendications précédentes, **caractérisé en ce que** le marqueur métallique est introduit dans le joint avec la masse d'assemblage (8) appliquée sur au moins une extrémité de coupe avant l'assemblage par liaison de matière des extrémités de coupe frontales (7', 7").

5. Profilé selon l'une des revendications précédentes, **caractérisé en ce que** le marqueur métallique est disposé sur le profilé (1) en s'étendant au-delà du joint (V).

6. Procédé de fabrication d'un profilé, comprenant les étapes de procédé :
- Sectionnement d'un profilé (1) en matière plastique souple et/ou en caoutchouc pour éliminer un défaut ou pour couper à longueur un tronçon de profilé à transformer en un anneau de profilé, des extrémités de coupe frontales (7', 7") étant obtenues lors du sectionnement,
- assemblage de deux extrémités de coupe frontales (7', 7") de deux tronçons de profilé différents ou d'un seul et même tronçon de profilé en créant un joint (V),
- Application d'un marqueur métallique dans la zone du joint (V) avant, pendant ou après l'opération d'assemblage,
- Application d'une bande adhésive (4) sur le profilé (1) pour fixer le profilé (1) sur le véhicule automobile,
**caractérisé en ce que**
au moins la couche adhésive (5) de la bande adhésive (4) est disposée sur le profilé (1) en s'étendant de manière continue sur le joint après la création du joint (V), les extrémités de coupe (7', 7") sont reliées par liaison de matière au moyen d'une masse d'assemblage (8) et le marqueur métallique est positionné entre les extrémités de coupe frontales (7', 7"), la masse d'assemblage (8) comprenant, dans le joint (V) créé, une épaisseur inférieure à 1 mm et/ou étant fournie par une feuille d'assemblage.

7. Procédé selon la revendication précédente, **caractérisé en ce que** le marqueur métallique est introduit dans une cavité du profilé (8) dans la zone d'au moins une extrémité de coupe frontale (7', 7").

8. Procédé selon l'une des deux revendications précédentes, **caractérisé en ce que** le marqueur métallique est introduit dans le joint (V) au moyen de la masse d'assemblage (8) appliquée sur au moins une extrémité de coupe avant l'assemblage par liaison de matière des extrémités de coupe frontales (7', 7").

9. Procédé selon l'une des trois revendications précédentes, **caractérisé en ce que** la masse d'assemblage (8) est préparée au moyen d'un matériau en bande enroulé sur un rouleau et est amenée au joint (V) en déroulant le matériau en bande du rouleau.
